# FASCICULE DE BREVET EUROPEEN

(11) **EP 3 068 863 B1**
(45) Date de publication et mention de la délivrance du brevet: **20.03.2019**
(21) Numéro de dépôt: 14795992.8
(22) Date de dépôt: 28.10.2014
(51) Int. Cl.: C12H 1/056, A23L 2/80

(54) **PROCÉDÉ DYNAMIQUE D'ÉLIMINATION PARTIELLE OU TOTALE DE COMPOSÉS ORGANOHALOGÉNÉS CONTENUS DANS DES BOISSONS, NOTAMMENT DANS DU VIN**
DYNAMISCHES VERFAHREN ZUR VOLLSTÄNDIGEN ODER TEILWEISEN ENTFERNUNG VON ORGANOHALOGENIERTEN VERBINDUNGEN IN GETRÄNKEN, INSBESONDERE WEIN
DYNAMIC METHOD FOR THE PARTIAL OR TOTAL ELIMINATION OF ORGANOHALOGENATED COMPOUNDS CONTAINED IN DRINKS, ESPECIALLY IN WINE

(30) Priorité: 12.11.2013 FR 1361009
(43) Date de publication de la demande: 21.09.2016
(73) Titulaire: IFP Energies nouvelles, 92500 Rueil-Malmaison (FR); Vect'oeur, 21209 Beaune Cedex (FR)
(72) Inventeur: THOMAS, Michel, F-69003 Lyon (FR); MARTIN, Michel, F-69006 Lyon (FR); DRINKINE-MAGNEUX, Jessica, F-21190 Merceuil (FR); BORNERT, Eric, F-21420 Savigny Les Beaunes (FR); MICHEL, Gérard, F-21800 Quetigny (FR)
(74) Mandataire: IFP Energies nouvelles
(86) Numéro de dépôt international: PCT/EP2014/073105
(87) Numéro de publication internationale: WO 2015/071092

(56) Documents cités:
- EP-A1- 0 730 830
- EP-A1- 1 961 805
- EP-A2- 0 080 298
- WO-A2-01/88082
- WO-A2-01/88082
- ES-A1- 2 195 784
- FR-A1- 2 873 593
- FR-A1- 2 907 462
- FR-A1- 2 907 462
- Wypych George: "Handbook of polymers", 2016, ChemTech Publishing, Toronto pages 156-163,

## Description

La présente invention se rapporte à un procédé dynamique d'élimination partielle ou totale de composés indésirables ou toxiques contenus dans des boissons, notamment dans du vin.

Elle concerne plus particulièrement l'élimination de composés polyhalogénés contenus dans le vin.

Ces dernières années, des mesures de restriction ou d'interdiction d'utilisation et de commercialisation d'un nombre de plus en plus important de composés chimiques, et en particulier de pesticides et autres produits de traitement, sont régulièrement prises. Cela est essentiellement dû à leur forte toxicité et à leur incidence sur la santé des consommateurs.

C'est ainsi le cas du pentachlorophénol (PCP), molécule utilisée comme produit de préservation du bois et comme désinfectant, herbicide, termiticide et peinture anti-bleuissement. Ce composé et ses sous-produits de fabrication (le 2,3,4,6-tétrachlorophénol (TeCP) essentiellement) présentent une forte toxicité pour l'organisme humain et pour les animaux.

De même, le lindane (1,2,3,4,5,6hexachlorocyclohexane) est aussi un composé toxique dont l'usage en tant qu'insecticide est très répandu, notamment pour le traitement des sols et du bois.

Un autre composé phénolique polybromé, le 2,4,6-tribromophénol (TBP), est par ailleurs de plus en plus utilisé comme retardateur de flamme, fongicide et/ou protecteur de bois. Sa toxicité est comparativement moins importante que celle du PCP ou d'autres retardateurs de flamme bromés, qui ont, quant à eux, fait l'objet d'interdictions. Néanmoins, son usage croissant va entraîner une exposition plus importante des consommateurs et, au titre du principe de précaution, il importe donc de réduire cette exposition au maximum.

De telles mesures restrictives concernant la production et l'usage de ces composés toxiques polyhalogénés vont produire un effet à court terme, mais les matériaux traités avec ces produits vont toutefois subsister.

De plus, comme il a déjà pu être observé par exemple avec le DDT, des traces résiduelles importantes de ces composés seront retrouvées pendant de nombreuses années dans des produits destinés à la consommation humaine, du fait de la stabilité de ces composés et de leur persistance dans les chaînes alimentaires.

Ceci est d'autant plus important pour l'industrie vinicole, au vu des quatre sources de contamination identifiées pour le vin.

La première source est le bouchon en liège qui libère du 2,4,6-trichloroanisole (TCA) et du 2,4,6-trichlorophénol (TCP) dans les vins embouteillés.

Toutefois, des vins peuvent présenter des goûts de moisi-bouchon avant tout contact avec un bouchon en liège. L'utilisation de biocides chlorés ou d'eau de réseau fortement chlorée conduit à la formation de TCP au contact des composés à cycle phénolique du vin, du bois, du liège ou encore de certaines résines utilisées pour le revêtement des sols et des cuves.

L'utilisation de produits de traitement fongicides et insecticides des bois a introduit le pentachlorophénol (PCP), le 2,3,4,6-tétrachlorophénol (TeCP) et le lindane dans les chais par l'intermédiaire des box-palettes, charpentes, portes....

Enfin, le 2,4,6-tribromophénol (TBP) a pour origine principale son utilisation comme anti-fongique sur les bois, et comme retardateur de flamme de nombreux matériaux (isolants, plastiques...).

Toutes ces molécules sont très volatiles et sont des vecteurs d'aérocontamination des vins et du matériel vinaire environnant présents dans les cuveries. Cela engendre des contaminations croisées qui amplifient, disséminent et perpétuent le processus de pollution.

Par ailleurs, dans le domaine du vin, l'élimination des haloanisoles est un problème majeur. Ces composés, et en particulier le 2,4,6-trichloroanisole (TCA), le 2,3,4,6-tétrachloroanisole (TeCA) et le 2,4,6-tribromoanisole (TBA) sont les principaux composés responsables du "goût de bouchon" dans les vins. Leur élimination provoque la disparition de ces mauvaises odeurs et mauvais goûts et permet de retrouver les qualités sensorielles initiales du vin. Les haloanisoles ont pour principale origine la o-méthylation des halophénols correspondants, processus essentiellement de nature microbiologique : 2,4,6-trichloroanisole (TCA) / 2,6-trichlorophénol (TCP), 2,3,4,6-tétrachloroanisole (TeCA) / 2,3,4,6-tétrachlorophénol (TeCP), pentachloroanisole (PCA) / pentachlorophénol (PCP), et tribromoanisole (TBA) / tribromophénol (TBP).

De plus, l'élimination des composés indésirables qui rentrent dans la catégorie des pesticides (PCP, Lindane, ...) permet une mise en conformité des vins en tenant compte d'une évolution probable des normes sur les résidus phytosanitaires, de façon à les rapprocher des normes actuellement en vigueur pour les eaux de consommation qui servent de référence (0,1µg/L (microgramme/litre) en quantité cumulée de pesticides selon le décret français n° 2001-1220 du 20 décembre 2001).

En outre, l'élimination de ces composés doit se faire sans nuire aux qualités organoleptiques des vins traités, c'est-à-dire en évitant de modifier le pool aromatique du vin considéré. Ceci est indispensable afin de respecter les législations en vigueur sur les appellations vinicoles et d'obtenir l'agrément des autorités concernées.

Enfin, la mise en oeuvre du procédé devra, pour les mêmes raisons, ne pas perturber le processus de vinification et être économiquement raisonnable.

Il est déjà connu, notamment par le brevet espagnol ES 2.195.784, une méthode d'élimination des chloroanisoles et des chlorophénols par trempage d'un plastique alimentaire, de préférence un film de polyéthylène basse densité, dans le vin à traiter, préalablement transvasé dans un récipient aseptique.

Un enseignement similaire est apporté par le brevet WO 2006/024767 de la demanderesse. Les essais menés avec du polyéthylène basse densité (PEBD) ont permis de réduire de plus de cinquante pour cent la teneur des principaux composés visés (PCP, TCP, TCA et lindane) dans les vins traités. Le PEBD employé lors de ces essais se présente sous la forme d'un film de 16/1000 de millimètres d'épaisseur. La durée de contact a été de 24 heures et la surface comprise entre 6 et 10 m² par hectolitre.

Par ailleurs, le brevet américain US 4.276.179 divulgue une méthode de retrait d'hydrocarbures halogènes, notamment le DDT et les biphényles polychlorés, de milieux aqueux en mettant le liquide à traiter en présence d'un adsorbant polyoléfinique. L'adsorbant consiste en un polymère choisit parmi les homopolymères d'éthylène, de propylène, de polytriméthylbutène et polyméthylpentène, ainsi que les copolymères de ces composés.

Le brevet EP 1.283.864 se rapporte à une méthode pour supprimer les flaveurs désagréables du vin par mise en contact avec du polyéthylène à très haut poids moléculaire (PEHD), substitué ou non avec des groupes acides et hydroxydes. La méthode consiste à filtrer le vin sur un lit de granulés d'adsorbant, dont la taille est d'environ 120 µm, à raison de 150 g de polymère par litre de vin. Le taux de TCA est ainsi fortement réduit.

Le brevet US 8.057.671 concerne l'utilisation de zéolithes désaluminées, d'un ratio Si/Al supérieur à 5, et notamment de structure Faujasite, pour éliminer le TCA du vin. Ces zéolithes sont utilisées sous forme de poudre, mélangées au vin, ce qui nécessite ensuite une étape de filtration pour les séparer du liquide traité.

On connaît également les documents :
- FR 2907462, qui concerne un procédé d'élimination de composés indésirables présents dans une boisson fermentée, comprenant le passage de la boisson dans une colonne comportant d'un polystyrène réticulé non fonctionnel sous forme de granules nanoporeux ;
- WO 01/88082 A2, qui concerne un procédé d'élimination de composés indésirables présents dans une boisson ou un aliment, comprenant l'étape de mise en contact de la boisson ou de l'aliment avec un ou plusieurs polymères aliphatiques sous formes de granulés.

A cet effet, la présente invention concerne un procédé d'élimination de composés polyhalogénés toxiques ou indésirables dans des boissons, ledit procédé comportant une étape de mise en contact de la boisson avec un adsorbant contenant un matériau polymérique, caractérisé en ce que l'étape de mise en contact consiste à faire circuler la boisson dans une colonne placée verticalement et contenant ledit adsorbant, tel que revendiqué.

Le procédé peut consister à utiliser une colonne avec une géométrie cylindrique, dont le rapport longueur/diamètre intérieur (L/D) est supérieur à 0,25 et préférentiellement supérieur à 1.

Le procédé peut consister à utiliser une colonne dont le rapport L/D est compris entre 2 et 50, et de manière encore préférée entre 2 et 10.

L'étape de mise en contact peut se dérouler selon une durée inférieure à 6 heures, et de préférence inférieure à 3 heures.

L'étape de mise en contact peut se dérouler selon une durée inférieure à 1 heure, de préférence inférieure à 30 minutes, ou de manière préférée inférieure à 15 minutes.

La vitesse superficielle de passage de la boisson liquide dans la colonne peut être préférentiellement inférieure à 1 m/min, et de manière préférée inférieure à 0,25 m/min.

Le procédé peut consister à régénérer l'adsorbant pour être réutilisé dans un nouveau cycle de traitement de la boisson.

Le procédé peut consister à régénérer l'adsorbant en mode dynamique par la circulation dans la colonne contenant ledit matériau d'une solution de régénération entraînant la désorption des composés polyhalogénés de l'adsorbant.

Le procédé peut consister à régénérer l'adsorbant par la circulation dans la colonne contenant ledit matériau d'un courant d'eau, d'éthanol, ou d'un mélange eau/éthanol.

Le procédé peut consister à réaliser une étape de stérilisation de l'adsorbant après l'étape de régénération.

Le procédé peut consister à utiliser un adsorbant avec une proportion de polymère non-aliphatique inférieure à 60%.

Le procédé peut consister à utiliser un homopolymère, linéaire ou branché en tant qu'adsorbant.

Le procédé peut consister à utiliser un copolymère en tant qu'adsorbant.

Le procédé peut consister à utiliser un mélange de polymères aliphatiques en tant qu'adsorbant.

Le procédé peut consister à utiliser un adsorbant résultant de la fusion d'un mélange de polymères aliphatiques.

Les monomères aliphatiques peuvent être choisis parmi : éthylène, propylène, butylène, acrylonitrile, méthyle de méthacrylate, cétones.

Le polymère aliphatique peut être choisi dans le groupe : polyéthylène basse densité, polyéthylène linéaire basse densité, polypropylène, polyacrylonitrile, poly(méthyle de méthacrylate de méthyle) et polycétones.

Le taux de cristallinité du ou des polymères est inférieur à 45%.

La granulométrie de l'adsorbant est comprise entre 50µm et 5mm, préférentiellement entre 150µm et 5mm.

La présente vise également une application du procédé au traitement de vin, d'eau, de jus de fruits, de bière ou d'alcools.

D'autres avantages et caractéristiques de l'invention ressortiront mieux de la description détaillée qui va suivre.

Selon une étape essentielle du procédé selon l'invention, la boisson à traiter est mise en contact avec un adsorbant consistant en un matériau polymère, mis en forme sous forme de granulés, et placé dans une colonne à l'intérieur de laquelle circule la boisson à traiter.

Grâce à cela, la granulométrie du matériau est plus grosse, ce qui a pour avantage de créer moins de perte de charge lors du passage de la boisson à traiter.

Par boisson, il est entendu en particulier des boissons destinées à la consommation humaine, comme du vin.

Les granulés sont, par exemple, des billes plus ou moins sphériques, ou bien des extrudés cylindriques, de quelques millimètres de longueur au maximum, typiquement inférieure à 2cm, et préférentiellement inférieure à 1cm. Le diamètre caractéristique de ces objets est par exemple compris entre 2 et 5mm, avantageusement entre 0,5 et 2mm. Des objets plus petits peuvent également être utilisés, par exemple ceux dont la granulométrie est comprise typiquement entre 50 et 500µm ou encore entre 150 et 500µm.

Le matériau polymère selon l'invention est avantageusement un homopolymère, linéaire ou branché, résultant de la polymérisation d'un seul monomère.

Le matériau polymère est alternativement un copolymère, résultat de la copolymérisation d'au moins deux types de monomères telle que classiquement connue, et est donc du type copolymère alterné, statistique ou copolymère-bloc.

Ce matériau résulte aussi d'associations ultérieures de deux ou plusieurs polymères, comme un copolymère greffé, obtenu par greffage par polymérisation en chaîne d'un polymère sur un premier substrat polymérique, ou comme le résultat de la fusion d'un mélange de particules de polymères aliphatiques par exemple.

Dans un premier exemple de l'invention, l'adsorbant utilisé est un copolymère.

Les monomères aliphatiques sont pris dans le groupe : éthylène, propylène, butylène, acrylonitrile, méthyle de méthacrylate, cétones. On préférera les alkyles inférieurs.

Dans un second exemple, l'adsorbant résulte de la fusion d'un mélange de particules de polymères aliphatiques.

Dans un troisième exemple de l'invention, l'adsorbant est constitué d'un homopolymère aliphatique, linéaire ou branché.

Dans un quatrième exemple, l'adsorbant est constitué par un mélange d'adsorbant des exemples un à trois.

Le polymère aliphatique est de préférence choisi parmi le polyéthylène sous ses différentes formes polyéthylène basse densité (PEBD), polyéthylène linéaire basse densité (PEBDL).

On peut également utiliser du polypropylène (PP), du polyacrylonitrile, du poly(méthacrylate de méthyle) ou des polycétones. De préférence, on utilise du polyéthylène basse densité (PEBD).

Les formulations préférées de l'adsorbant selon l'invention sont choisies dans le groupe : PEBD/PET, PP/PET, PP/PPT, PEBD/PP.

L'adsorbant a une structure semi-cristalline, avec un taux de cristallinité inférieur à 45%.

En effet, plus le réseau cristallin du polymère est lâche, plus la diffusion dans l'épaisseur de l'adsorbant des molécules adsorbées à sa surface est facilitée, permettant ainsi d'éliminer plus de molécules toxiques ou indésirables. Ce taux de cristallinité peut par exemple être déterminé par la technique de calorimétrie différentielle à balayage (DSC) par comparaison avec des échantillons de référence.

Par ailleurs, les polymères employés sont des polymères de qualité alimentaire.

Selon une étape importante de l'invention, l'adsorbant est placé dans une colonne dans laquelle la boisson à traiter est mise en circulation de manière à assurer un temps de contact minimal entre la boisson et le polymère afin de réduire notamment les taux des molécules indésirables, comme les halophénols et les haloanisoles.

La colonne est placée verticalement de manière à favoriser le contact entre le liquide et le polymère et à éviter tout passage préférentiel du liquide, par exemple vers la paroi de la colonne.

La boisson peut circuler dans la colonne de haut en bas ("down-flow") ou de bas en haut ("up-flow"). De manière préférée, la circulation se fera en "up-flow", du bas de la colonne vers le haut.

Le débit du liquide est ajusté de manière à assurer un temps de contact minimal avec le solide au sein de la colonne. De manière avantageuse, la durée de contact de la boisson avec l'adsorbant solide dans la colonne est inférieure à 6 heures, et de préférence inférieure à 3 heures. De manière encore préférée, elle est typiquement inférieure à 1 heure, ou bien inférieure à 30 minutes, ou bien encore inférieure à 15 minutes.

La quantité totale d'adsorbant à mettre en contact ainsi que la durée de mise en contact avec la boisson peuvent être aisément optimisées par l'Homme du Métier en fonction de la teneur initiale en composés toxiques ou indésirables de la boisson à traiter.

A titre indicatif seulement, il a été par exemple possible de traiter un volume de vin, dont la teneur totale en haloanisoles est de 38 nanogrammes par litre (ng/L), équivalent à environ 50 fois le volume de colonne contenant le solide adsorbant, avec un temps de contact de 15 minutes.

La colonne dans laquelle est placé le solide a de préférence une géométrie cylindrique, dont le rapport L/D (longueur/diamètre intérieur) est supérieur à 0,25 et préférentiellement supérieur à 1. De manière préférée, il sera compris entre 2 et 50, et de manière encore préférée entre 2 et 10.

Afin d'assurer un temps de contact suffisant entre le liquide à traiter et l'adsorbant solide, la vitesse superficielle (colonne "vide") de passage de la boisson liquide dans la colonne est préférentiellement inférieure à 1 mètre par minute (m/min), et de manière préférée inférieure à 0,25 m/min. Exprimée en terme de vitesse volumique horaire, ou VVH (définie comme rapport du débit du liquide au volume de la colonne vide), cela correspond à des valeurs inférieures à 25 m³/m³/h, et préférentiellement inférieures à 10 m³/m³/h.

Selon les volumes de liquide à traiter, il est naturellement possible d'utiliser plusieurs colonnes montées en série et/ou en parallèle.

Un autre avantage du procédé est que le matériau polymère utilisé peut être facilement régénéré pour être réutilisé dans un nouveau cycle de traitement en permettant ainsi de réaliser une économie substantielle du matériau adsorbant.

Cette étape de régénération se fait également préférentiellement en mode dynamique par circulation dans la colonne contenant ledit matériau d'un courant de solution de régénération qui va entraîné la désorption des composés notamment de type halophénols et haloanisoles du matériau polymère. Cette solution de régénération peut être constituée par de l'eau ou par une solution hydroalcoolique, comme par exemple un mélange eau/éthanol (grade alimentaire), ou bien encore par de l'éthanol (grade alimentaire).

La solution de régénération utilisée pour cette étape de régénération est exempte au maximum de traces de chlore, de composés alcalins chlorés et de composés halogénés qui peuvent soit diminuer l'efficacité de la régénération, soit augmenter la charge polluante du liquide issue de la régénération et à dépolluer lors d'une étape ultérieure. Elle devra également répondre aux normes antibactériennes en usage.

Le traitement préalable de la solution de régénération servant à la régénération du matériau polymère peut être réalisé selon les procédures classiques connues de l'Homme de Métier. Par exemple, un traitement extemporané de l'eau et/ou de l'éthanol sur charbons actifs est réalisé afin d'éliminer toute trace de chlore, de brome, de composés alcalins chlorés et de composés organohalogénés dans l'eau.

Avantageusement, cette étape de régénération est effectuée à une température comprise entre la température ambiante et 100°C, et préférentiellement entre la température ambiante et 50°C.

Il est notamment choisi une température maximale qui n'entraîne pas de dégradation significative des propriétés du polymère, comme par exemple son taux de cristallinité, ou qui n'entraîne pas des variations significatives de températures de transition, déterminées entre autre par DSC.

Le volume de la solution de régénération à utiliser pour la régénération est compris entre 5 et 100 fois le volume de la colonne contenant le matériau polymère, et préférentiellement entre 10 et 50 fois ce volume.

Une étape de stérilisation du matériau polymère est une condition *sine qua none* pour assurer la stabilité microbiologique du matériau polymère en vue d'une réutilisation ultérieure.

Il est préférentiellement choisi une méthode de stérilisation exempte d'organohalogénés et n'entraînant pas de dégradation significative des propriétés du polymère, comme par exemple son taux de cristallinité, ou n'entraînant pas des variations significatives de températures de transition, déterminées par exemple par DSC.

Par exemple, une solution d'acide peracétique comprise entre 200 et 350 ppm peut être utilisée. La durée de mise en contact, statique ou dynamique, peut être aisément optimisée par l'Homme du Métier en fonction des conditions de mise en oeuvre. Une étape de rinçage à l'eau préalablement traitée est ensuite réalisée jusqu'à disparition complète de l'agent désinfectant par contrôle pH.

La solution de régénération, hors étape de stérilisation, qui sort de la colonne est susceptible de contenir à l'état dissous tout ou partie des composés halogénés, et notamment les halophénols et haloanisoles désorbés du polymère.

Afin de limiter la quantité de solution à utiliser, ou de limiter les rejets dans l'environnement, il est possible de traiter cette solution de régénération pour éliminer, totalement ou du moins en partie, ces composés halogénés dissous, et de réutiliser éventuellement en circuit fermé cette solution ainsi traitée dans l'étape de régénération afin de limiter la quantité totale d'eau à utiliser.

Un autre avantage est de limiter éventuellement toute aérocontamination de l'air ambiant par ces composés halogénés qui peuvent alors, à leur tour, contaminer davantage les boissons à traiter.

Le traitement de cette solution de régénération contaminée par les composés chlorés peut être réalisé par exemple selon deux voies.

La première voie consiste à faire circuler directement cette solution liquide sur un filtre contenant un adsorbant adéquat pour capter en phase liquide les composés halogénés.

La seconde voie consiste à utiliser un réservoir tampon dans lequel la solution de régénération est mise en contact avec un courant gazeux, par exemple constitué d'air ou d'un gaz inerte comme l'azote, de manière à entraîner totalement ou en partie les composés halogénés dissous dans ce gaz, puis à traiter ce gaz chargé en composés halogénés sur un filtre contenant un adsorbant adéquat pour capter en phase gazeuse les composés halogénés. Avantageusement, un système permettant un meilleur contact gaz/liquide, comme par exemple un bullage à travers un fritté de petite taille de pores, ou bien tout système conduisant à une grande dispersion des bulles de gaz dans le liquide, est alors utilisé.

Parmi les solides adsorbants capables d'adsorber les composés halogénés, et notamment les halophénols et haloanisoles, on peut citer, de manière non limitative, préférentiellement des solides hydrophobes comme les charbons actifs, les résines polymériques comme par exemple les résines de type poly-styrène-divinylbenzène, ou bien encore des tamis moléculaires ou zéolithes, préférentiellement celles de type Faujasite avec rapport molaire Si/Al supérieur à 2,4 et préférentiellement supérieur à 5. Ces solides sont préférentiellement utilisés sous forme de granulés, billes ou extrudés, dont la granulométrie est par exemple comprise entre 50µm et 5 mm, préférentiellement entre 150µm et 5mm.

Dans le cas d'une réutilisation éventuelle en circuit fermé de la solution de régénération, il convient de s'assurer de la stabilité microbiologique de la solution au cours du temps. La mise en place d'un système de filtration stérilisante couplée ou non à lampe UV pour éliminer les microorganismes de la solution de régénération est recommandée. Un contrôle régulier des paramètres d'alimentarité de la solution sont nécessaires.

Avec le procédé écrit ci-dessus, les teneurs des différents composés aromatiques du vin n'ont pas ou peu été modifiées, en tous les cas pas organoleptiquement perceptible lors d'une dégustation. De plus, aucune trace de contamination du vin par des composés provenant de l'adsorbant n'a été relevée.

Si les adsorbants selon l'invention sont particulièrement efficaces à l'encontre des halophénols et des haloanisoles, on admet sans difficulté en regard de l'art antérieur qu'ils ont également une action à l'encontre d'autres composés polyhalogénés toxiques susceptibles d'être présents dans les vins traités, comme par exemple les polychlorobromophénols et les résidus de produits phytosanitaires organochlorés.

De plus, on comprend bien que ce procédé particulièrement applicable au traitement des vins est transposable sans aucune difficulté à d'autres boissons destinées à la consommation humaine, notamment les jus de fruits, l'eau, la bière, ou encore les alcools forts.

Les demandeurs ont réalisé des tests comme décrits dans les exemples ci-après avec une boisson à base de vin qui ont permis de mettre en évidence une adsorption sélective des composés visés, notamment les halophénols et les haloanisoles précités, sans modification perceptible du pool aromatique et des qualités organoleptiques du vin traité.

Il va de soi que les exemples de mise en oeuvre du procédé selon l'invention ne sont que des cas particuliers, en aucun cas limitatifs de l'invention.

### Exemple 1 :

Un test "à blanc", avec une colonne vide, sans matériaux adsorbant, a d'abord été réalisé, afin de vérifier qu'il n'y ait pas d'adsorption parasite des halophénols et haloanisoles sur les parois des lignes ou de la colonne.

Caractéristiques de la colonne :

| |
|---|
| - longueur colonne : 50 cm |
| - diamètre colonne : 2 cm |
| - volume colonne : 157 cm³ |
| - débit du vin : 500 cm³/h |
| - temps de contact vin dans la colonne vide : 19 minutes |

Environ 3 litres (L) de vin ont été utilisés dans ce test, ce qui représente environ 19 volumes de colonne vide. Des échantillons de vin ont été prélevés régulièrement au cours du temps pour la détermination des teneurs en haloanisoles (HA), halophénols (HP) et lindane (HCH) par chromatographie en phase gazeuse.

Avant la circulation du vin à l'intérieur de la colonne, la teneur initiale totale dans le vin en HP est de 51,5 ng/L, celle en HA est de 39,1 ng/L, celle en HCH de 7,6 ng/L.

Après la traversée de ce vin dans cette colonne vide, ces teneurs sont respectivement de 51,0 ng/L, 38,6 ng/L et 7,6 ng/L.

On n'observe donc pas de variations significatives de ces teneurs en l'absence d'adsorbant dans la colonne.

### Exemple 2 :

Un premier lot de vin contaminé en halophénols (HP), haloanisoles (HA) et lindane (HCH) a été traité par passage sur une colonne remplie de billes de polyéthylène (PEBD) d'un diamètre moyen de 3,5 à 4,5 mm, dans les conditions suivantes :

| |
|---|
| - longueur colonne : 50 cm |
| - diamètre colonne : 2 cm |
| - volume colonne : 157 cm³ |
| - masse PE : 90 g |
| - débit du vin : 250 cm³/h |
| - temps de contact vin/PEBD*)* : 15 minutes |

Le taux de cristallinité du polymère, déterminé par DSC, est de 35 %.

Le volume de vin traité est de 8000 cm³, ce qui représente l'équivalent d'environ 50 volumes de colonne (vide). Des échantillons de vin ont été prélevés régulièrement au cours du temps pour la détermination des teneurs en HA, HP et HCH par chromatographie en phase gazeuse.

La teneur initiale totale dans le vin en HP est de 55,2 ng/L, celle en HA est de 35,5 ng/L, celle en HCH de 10,8 ng/L.

Après traitement par traversée de la colonne contenant le PEBD, ces teneurs sont respectivement de 41,0 ng/L, 2,1 ng/L et 8,5 ng/L. Les taux d'élimination correspondants sont donc respectivement de 25 %, 94 %, et 21 %.

### Exemple 3 :

Un deuxième lot de vin contaminé en halophénols (HP), haloanisoles (HA) et lindane (HCH) a été traité dans les mêmes conditions sur une colonne remplie de billes du même polyéthylène (PEBD) d'un diamètre moyen de 3,5 à 4,5 mm.

Le volume de vin traité est de 15000 cm³, ce qui représente l'équivalent d'environ 90 volumes de colonne (vide). Des échantillons de vin ont été prélevés régulièrement au cours du temps pour la détermination des teneurs en HA, HP et HCH par chromatographie en phase gazeuse.

La teneur initiale totale dans le vin en HP est de 173,7 ng/L, celle en HA est de 74,6 ng/L, celle en HCH de 9,5 ng/L.

Après traitement, ces teneurs sont respectivement de 153,2 ng/L, 7,8 ng/L et 7,9 ng/L. Les taux d'élimination correspondants sont donc respectivement de 12 %, 89 %, et 17 %.

Il est à noter que, durant ces essais, la teneur des différents composés aromatiques du vin n'a quasi pas été modifiée et aucune trace de contamination du vin par des composés provenant de l'adsorbant n'a été relevée.

## Revendications

1. Procédé d'élimination de composés polyhalogénés toxiques ou indésirables dans des boissons, ledit procédé comportant une étape de mise en contact de la boisson avec un adsorbant contenant un matériau polymérique, **caractérisé en ce que** l'étape de mise en contact consiste à faire circuler la boisson dans une colonne placée verticalement et contenant ledit adsorbant, et **en ce qu'**il consiste à utiliser un homopolymère aliphatique, linéaire ou branché en tant qu'adsorbant, ou bien à utiliser un mélange de polymères aliphatiques en tant qu'adsorbant, ou bien à utiliser un adsorbant résultant de la fusion d'un mélange de polymères aliphatiques, et **en ce que** ledit adsorbant a une structure semi-cristalline, le taux de cristallinité dudit adsorbant étant inférieur à 45%, et **en ce que** ledit polymère aliphatique est choisi dans le groupe : polyéthylène basse densité, polyéthylène linéaire basse densité, polypropylène, polyacrylonitrile, poly(méthyle de méthacrylate de méthyle) et polycétones, et **en ce que** la granulométrie de l'adsorbant est comprise entre 50µm et 5 mm, préférentiellement entre 150µm et 5mm.

2. Procédé selon la revendication 1, **caractérisé en ce qu'**il consiste à utiliser une colonne avec une géométrie cylindrique, dont le rapport longueur/diamètre intérieur (L/D) est supérieur à 0,25 et préférentiellement supérieur à 1.

3. Procédé selon la revendication 1 ou 2, **caractérisé en ce qu'**il consiste à utiliser une colonne dont le rapport L/D est compris entre 2 et 50, et de manière encore préférée entre 2 et 10.

4. Procédé selon la revendication 1, **caractérisé en ce que** l'étape de mise en contact se déroule selon un durée inférieure à 6 heures, et de préférence inférieure à 3 heures.

5. Procédé selon la revendication 4, **caractérisé en ce que** l'étape de mise en contact se déroule selon une durée inférieure à 1 heure, de préférence inférieure à 30 minutes, ou de manière préférée inférieure à 15 minutes.

6. Procédé selon l'une des revendications précédentes, **caractérisé en ce qu'**il consiste à régénérer l'adsorbant pour être réutilisé dans un nouveau cycle de traitement de la boisson.

7. Procédé selon la revendication 6, **caractérisé en ce qu'**il consiste à régénérer l'adsorbant en mode dynamique par la circulation dans la colonne contenant ledit matériau d'une solution de régénération entraînant la désorption des composés polyhalogénés de l'adsorbant.

8. Procédé selon la revendication 7, **caractérisé en ce qu'**il consiste à régénérer l'adsorbant par la circulation dans la colonne contenant ledit matériau d'un courant d'eau, d'éthanol, ou d'un mélange eau/éthanol.

9. Procédé selon l'une des revendications 6 à 8, **caractérisé en ce qu'**il consiste à réaliser une étape de stérilisation de l'adsorbant après l'étape de régénération.

10. Procédé selon l'une des revendications 1 à 9 précédentes, **caractérisé en ce qu'**il consiste à utiliser un copolymère en tant qu'adsorbant.

11. Procédé selon l'une des revendications précédentes, **caractérisé en ce que** les monomères aliphatiques sont choisis parmi : éthylène, propylène, butylène, acrylonitrile, méthyle de méthacrylate, cétones.

12. Application du procédé selon l'une des revendications précédentes au traitement de vin, d'eau, de jus de fruits, de bière ou d'alcools.

## Patentansprüche

1. Verfahren zur Eliminierung toxischer oder unerwünschter polyhalogenierter Verbindungen in Getränken, wobei das Verfahren einen Schritt des Inkontaktbringens des Getränks mit einem Adsorptionsmittel, das ein Polymermaterial enthält, umfasst, **dadurch gekennzeichnet, dass** der Schritt des Inkontaktbringens daraus besteht, das Getränk in einer Säule zirkulieren zu lassen, die vertikal platziert ist und das Adsorptionsmittel enthält, und dadurch, dass dieses daraus besteht, ein aliphatisches, lineares oder verzweigtes Homopolymer als Adsorptionsmittel zu verwenden, oder auch eine Mischung aliphatischer Polymere als Adsorptionsmittel zu verwenden, oder auch ein Adsorptionsmittel zu verwenden, das aus dem Zusammenführen einer Mischung aliphatischer Polymere resultiert, und dadurch, dass das Adsorptionsmittel eine semikristalline Struktur aufweist, wobei der Kristallinitätsgrad des Adsorptionsmittels geringer ist als 45 %, und dadurch, dass das aliphatische Polymer ausgewählt wird aus der Gruppe: Polyethylen mit niedriger Dichte, lineares Polyethylen mit niedriger Dichte, Polypropylen, Polyacrylonitril, Poly(methylmethacrylat) und Polyketone, und dadurch, dass die Granulometrie des Adsorptionsmittels zwischen 50 µm und 5 mm, vorzugsweise zwischen 150 µm und 5 mm, beträgt.

2. Verfahren nach Anspruch 1, **dadurch gekennzeichnet, dass** dieses daraus besteht, eine Säule mit einer zylindrischen Geometrie zu verwenden, deren Verhältnis Länge/Innendurchmesser (L/D) größer ist als 0,25 und vorzugsweise größer als 1.

3. Verfahren nach Anspruch 1 oder 2, **dadurch gekennzeichnet, dass** dieses daraus besteht, eine Säule zu verwenden, deren Verhältnis L/D zwischen 2 und 50 und bevorzugter zwischen 2 und 10 beträgt.

4. Verfahren nach Anspruch 1, **dadurch gekennzeichnet, dass** der Schritt des Inkontaktbringens mit einer Dauer von weniger als 6 Stunden und vorzugsweise weniger als 3 Stunden abläuft.

5. Verfahren nach Anspruch 4, **dadurch gekennzeichnet, dass** der Schritt des Inkontaktbringens mit einer Dauer von weniger als 1 Stunde, vorzugsweise weniger als 30 Minuten oder bevorzugter weniger als 15 Minuten abläuft.

6. Verfahren nach einem der vorhergehenden Ansprüche, **dadurch gekennzeichnet, dass** dieses daraus besteht, das Adsorptionsmittel zu regenerieren, um in einem neuen Behandlungszyklus des Getränks wiederverwendet zu werden.

7. Verfahren nach Anspruch 6, **dadurch gekennzeichnet, dass** dieses daraus besteht, das Adsorptionsmittel im dynamischen Modus durch die Zirkulation einer Regenerationslösung in der Säule, welche das Material enthält, zu regenerieren, die zur Desorption der polyhalogeneierten Verbindungen des Adsorptionsmittels führt.

8. Verfahren nach Anspruch 7, **dadurch gekennzeichnet, dass** dieses daraus besteht, das Adsorptionsmittel durch die Zirkulation eines Stroms von Wasser, Ethanol oder einer Mischung von Wasser/Ethanol in der Säule, welche das Material enthält, zu regenerieren.

9. Verfahren nach einem der Ansprüche 6 bis 8, **dadurch gekennzeichnet, dass** dieses daraus besteht, einen Sterilisationsschritt des Adsorptionsmittels nach dem Regenerationsschritt durchzuführen.

10. Verfahren nach einem der vorhergehenden Ansprüche 1 bis 9, **dadurch gekennzeichnet, dass** dieses daraus besteht, ein Copolymer als Adsorptionsmittel zu verwenden.

11. Verfahren nach einem der vorhergehenden Ansprüche, **dadurch gekennzeichnet, dass** die aliphatischen Monomere ausgewählt werden aus: Ethylen, Propylen, Butylen, Acrylonitril, Methylmethacrylat, Ketonen.

12. Verwendung des Verfahrens nach einem der vorhergehenden Ansprüche zur Behandlung von Wein, Wasser, Fruchtsäften, Bier oder Alkoholen.

## Claims

1. A method for removing toxic or unwanted polyhalogenated compounds from drinks, said method comprising a stage of contacting the drink with an adsorbent containing a polymeric material, **characterized in that** the contacting stage consists in circulating the drink in a vertically arranged column containing said adsorbent and in using an aliphatic homopolymer, linear or branched, as the adsorbent, or in using a mixture of aliphatic polymers as the adsorbent, or in using an adsorbent resulting from the melting of a mixture of aliphatic polymers, and **in that** said adsorbent has a semicrystalline structure, the degree of crystallinity of said adsorbent being less than 45%, and **in that** said aliphatic polymer is selected from the group: low-density polyethylene, low-density linear polyethylene, polypropylene, polyacrylonitrile, poly(methyl methacrylate) and polyketones, and **in that** the grain size of the adsorbent ranges between 50 µm and 5 mm, preferably between 150 µm and 5 mm.

2. A method as claimed in claim 1, **characterized in that** it consists in using a column of cylindrical geometry whose length/inside diameter ratio (L/D) is greater than 0.25 and preferably greater than 1.

3. A method as claimed in claim 1 or 2, **characterized in that** it consists in using a column whose L/D ratio ranges between 2 and 50, preferably between 2 and 10.

4. A method as claimed in claim 1, **characterized in that** the contacting stage is carried out over a period of less than 6 hours, preferably less than 3 hours.

5. A method as claimed in claim 4, **characterized in that** the contacting stage is carried out over a period of less than 1 hour, preferably less than 30 minutes, or more preferably less than 15 minutes.

6. A method as claimed in any one of the previous claims, **characterized in that** it consists in regenerating the adsorbent so as to re-use it in a new drink treatment cycle.

7. A method as claimed in claim 6, **characterized in that** it consists in regenerating the adsorbent in dynamic mode by circulating through the column containing said material a regeneration solution causing desorption of the polyhalogenated compounds of the adsorbent.

8. A method as claimed in claim 7, **characterized in that** it consists in regenerating the adsorbent by circulating through the column containing said material a stream of water, of ethanol, or of a water/ethanol mixture.

9. A method as claimed in any one of claims 6 to 8, **characterized in that** it consists in carrying out an adsorbent sterilization stage after the regeneration stage.

10. A method as claimed in any one of claims 1 to 9, **characterized in that** it consists in using a copolymer as the adsorbent.

11. A method as claimed in any one of the previous claims, **characterized in that** the aliphatic monomers are selected from among: ethylene, propylene, butylene, acrylonitrile, methyl methacrylate, ketones.

12. Application of the method as claimed in any one of the previous claims to the treatment of wine, water, fruit juice, beer or alcohols.
